# EUROPÄISCHE PATENTANMELDUNG

(11) **EP 1 203 606 A1**
(43) Veröffentlichungstag der Anmeldung: **08.05.2002**
(21) Anmeldenummer: 01125691.4
(22) Anmeldetag: 26.10.2001
(51) Int. Cl.: B01D 15/08, G01N 30/60, B67D 3/04, F16K 5/06

(54) **Behälter mit verschliessbarer Öffnung**

(30) Priorität: 04.11.2000 DE 10054781
(71) Anmelder: InfraServ GmbH & Co. Höchst KG, 65926 Frankfurt am Main (DE)
(72) Erfinder: Simon, Klaus-Jürgen, 65779 Kelkhelm (DE); Itter, Klaus, 61184 Karben (DE)
(74) Vertreter: Ackermann, Joachim, Dr.

(57) **Zusammenfassung**

Beschrieben wird ein Behälter (1) mit verschließbarer Öffnung umfassend ein Kugel-(3) oder Schiebergehäuse (3a), das an der verschließbaren Öffnung mit dem Behälter verbunden ist
a) eine Absperrkugel (6) oder einen Schieber (6a), und
b) Mittel, um die Absperrkugel oder den Schieber aus einer Schließposition in eine Öffnungsposition oder wieder zurück zu bewegen, wobei
das Kugel- oder Schiebergehäuse derart ausgestaltet ist, daß es bündig mit der Behälterinnenseite abschließt.

Die Vorrichtungen weisen keinen oder nur einen einen geringen Totraum auf der Behälterinnenseite auf.

## Beschreibung

Die Erfindung betrifft einen an Behälter angebrachten Kugelhahn oder einen Schieber, die nur einen geringen oder keinen Totraum aufweisen.

In der Herstellung und Verarbeitung von Produkten ist es häufig notwendig verschiedene Komponenten in Behältern miteinander zu vermischen, beispielsweise um chemische Reaktionen durchzuführen oder um Formulierungen herstellen zu können. Ein- und Ablaßöffnungen der Behälter sind üblicherweise mit Ein- und Ablaßvorrichtungen versehen, die ein Ein- bzw. Austragen der Komponenten gestatten oder erleichtern. Bekannte Ein- und Ablaßvorrichtungen dieser Art weisen Toträume auf, da die Vorrichtungen gegenüber der Behälterinnenwand versetzt sind.

Toträume im Behälter weisen eine Reihe von Nachteilen auf. So können beim Vermischen der Komponenten an diesen Stellen beispielsweise Ver-wirbelungen auftreten oder es lagern sich Komponenten der Mischung an diesen Stellen ab. Ferner können Probleme beim Austragen des Behälterinhalts an diesen Stellen auftreten, da sich in den Toträumen Reste des Inhalts sammeln und nur durch zusätzlichen Aufwand entfernt werden können.

Bei den Behältern kann es sich um Chromatographiesäulen handeln, beispielsweise um Säulen, die um Zylinderlängsachse drehbar gelagert sind und die in der DE-C-199 03 255 beschrieben werden. Chromatographiesäulen werden häufig mit Chromatographiemedium befüllt, das eine feste Packung bildet und nach der Durchführung der Chromatographie nur schwierig und aufwendig zu entfernen ist. Häufig müssen derartige Säulen manuell ausgetragen und anschließend mit Waschflüssigkeit gespült werden. Bei Anwendungen in der pharmazeutischen Industrie müssen diese Säulen üblicherweise noch desinfiziert werden. Alle diese Schritte sind zeit- und kostenaufwendig. Die Anwesenheit von Toträumen in den Chromato-graphiesäulen vergrößert den Aufwand beim Austragen, Reinigen und Desinfizieren und somit die Kosten für das Betreiben der Säulen.

Mit der vorliegenden Erfindung sollen Behälter bereitgestellt werden, deren Ein- und/oder Auslaßöffnungen verschließbar sind und die wenig oder keine Toträume aufweisen.

Eine Ausführungsform der Erfindung betrifft Behälter mit verschließbarer Öffnung umfassend
a) ein Kugelgehäuse, das an der verschließbaren Öffnung mit dem Behälter verbunden ist
b) eine Absperrkugel, und
c) Mittel, um die Absperrkugel aus einer Schließposition in eine Öffnungsposition oder wieder zurück zu bewegen, wobei
das Kugelgehäuse derart ausgestaltet ist, daß es bündig mit der Behälterinnenseite abschließt.

Eine weitere Ausführungsform der Erfindung betrifft Behälter mit verschließbarer Behälter mit verschließbarer Öffnung umfassend
d) ein Schiebergehäuse, das an der verschließbaren Öffnung mit dem Behälter verbunden ist
e) einen Schieber, und
f) Mittel, um den Schieber aus einer Schließposition in eine Öffnungsposition oder wieder zurück zu bewegen, wobei
das Schiebergehäuse derart ausgestaltet ist, daß es bündig mit der Behälterinnenseite abschließt.

In einer bevorzugten Ausführungsform betrifft die Erfindung eine Chromatographiesäule als Behälter, insbesondere eine Chromatographiesäule umfassend einen zylindrischen Säulenkörper, einen Boden, einen in Richtung der Zylinderlängsachse beweglichen, den zylindrischen Säulenkörper nach oben abdichtenden Deckel, eine im zylindrischen Säulenkörper angebrachte Auslaßvorrichtung gemäß der vorliegenden Erfindung für das Füllgut und Aufschlämmeinheiten, die Flüssigkeit auf die Oberfläche des Füllguts eindüsen können, wobei der zylindrische Säulenkörper um eine senkrecht zur Zylinderlängsachse verlaufende Achse drehbar gelagert ist.

Nach der Durchführung des Chromatographiebetriebs wird der Deckel in Richtung der Zylinderlängsachse bewegt, so daß sich zwischen Deckel und Oberfläche des Füllguts ein Zwischenraum ausbildet. Dabei wird der Deckel nur soweit angehoben, daß dieser die Chromatographiesäule immer noch abdichtet.

In diesen Zwischenraum wird nun ein Medium (Flüssigkeit, Gas, Feststoff) beispielsweise Wasser, eingedüst, um das Füllgut aufzulockern und das Austragen zu erleichtern.

Zum Austragen des Füllguts wird die Chromatographiesäule um die senkrecht zur Zylinderlängsachse verlaufende Achse um einen derartigen Winkel gedreht, daß die in dem zylindrischen Säulenkörper angebrachte erfindungs-gemäße Auslaßvorrichtung, beispielsweise ein Kugelhahn, den tiefsten Punkt erreicht und eine Auslaßposition einnimmt.

Nachdem die Säule in Austragsposition gedreht worden ist, wird die Auslaßvorrichtung geöffnet und die Flüssigkeit in den Zwischenraum eingedüst. Die Flüssigkeit bewirkt eine Auflockerung des festgepackten Füllguts und ein mechanisches Auflockern der Packung. Somit wird der Austrag des Füllguts aus der Säule überhaupt erst möglich. Ferner bewirkt die Flüssigkeit gleichzeitig ein Spülen des Säuleninnenraums, so daß die Säule nach dem Entleeren sogleich für einen neuen Arbeitsgang zur Verfügung steht. Infolge des geringen Totraumes zwischen Behälterinnenwand und Kugel des Kugelhahns reicht das Spülen mit der Flüssigkeit üblicherweise völlig aus, um das Füllgut vollständig auszutragen.

Ein weiterer Vorteil der erfindungsgmäßen Behälter ist darin zu sehen, daß das Gehäuse für das Absperrmittel, also die Kugel oder den Schieber, gereinigt werden kann, ohne das Gehäuse zu demontieren. Infolge des fehlenden oder des geringen Totraumes ist es ohne weiteres möglich, den Behälter von dessen Innenraum her mechanisch zu reinigen, beispielsweise mit mechanischen Mitteln oder durch den Einsatz von Wasserstrahlen. Ablagerungen und Keimbildungen an den Übergangsstellen können so vermieden werden, insbesondere wenn die mechanische Reinigung mit einer nachgeschalteten Sterilisation verbunden wird.

Der Vorteil der erfindungsgemäßen Behälter ist insbesondere darin zu sehen, daß das manuelle, arbeits- und daher kostenintensive Reinigen, insbesondere beim Entpacken von Säulen mit großen Durchmessern, beispielsweise von mehr als 600 mm und einem (Gel-) Bettvolumen von mehr als 500 I entfallen kann.

In einer bevorzugten Ausführungsform ist das Kugelgehäuse oder das Schiebergehäuse auf einen Blockflansch montiert, der die Behälteröffnung umgibt.

Die Kugel ist vorzugsweise so dimensioniert und in das Kugelgehäuse eingebaut, daß sie in Absperrposition nicht in die Behälterinnenwand hineinragt. Vorzugsweise schließt die Kugel mit ihrem obersten Punkt mit der Behälterinnenwand bündig ab. In einer weiteren bevorzugten Ausführungsform ist die der Behälterinnnenwand zugewandte Seite der Kugel abgeflacht oder derart ausgefräst, daß die Kugel in Absperrposition die Behälterinnenwand bündig abschließt.

Der Schieber ist vorzugsweise so dimensioniert und in das Kugelgehäuse eingebaut, daß er in Absperrposition nicht in die Behälterinnenwand hineinragt. Vorzugsweise schließt der Schieber in Absperrposition mit der Behälterinnenwand bündig ab. Dazu kann es notwendig sein, daß die der Behälterinnenwand zugewandte Oberfläche des Schiebers entsprechend ausgefräst ist, um an die Form der Behälterinnenwand angepaßt zu werden.

Die Materialauswahl von Kugel- oder Schiebergehäuse bzw. von Kugel oder Schieber hängt von dem ins Auge gefaßten Verwendungszweck ab. Als Materialien kommen Metalle aber auch Kunststoffe in Frage.
Die nachfolgenden Figuren stellen beispielhaft Ausführungen der vorliegenden Erfindung dar. Eine Beschränkung ist dadurch nicht beabsichtigt.
Es zeigt:
Fig. 1: eine Ausgestaltung eines Absperr- und Reinigungskugelhahnes, der an einem Behälter angebracht ist,
Fig. 2 eine Ausgestaltung eines Schiebers, der an einem Behälter angebracht ist, und
Fig. 3 eine Ausgestaltung eines Sprüh- und Reinigungskugelhahnes, der an einem Behälter angebracht ist.

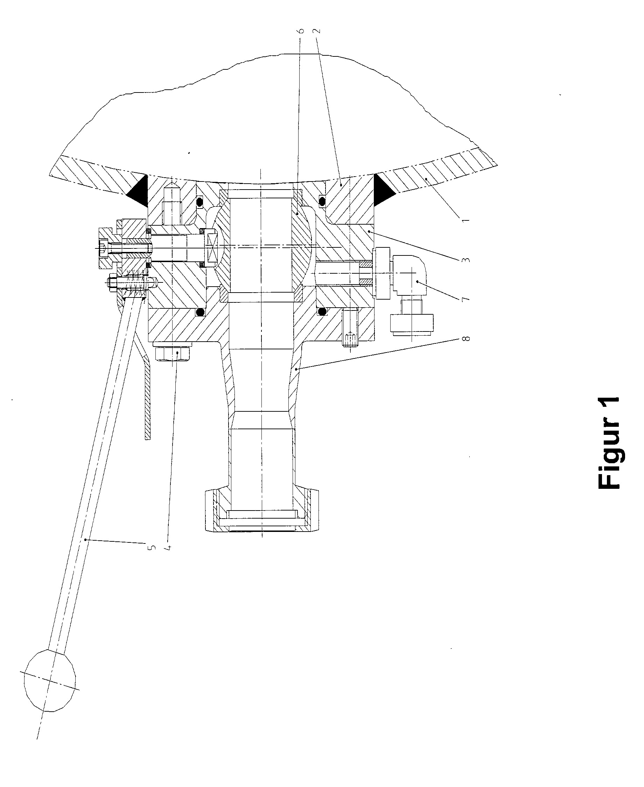

In Fig. 1 ist ein Kugelhahn dargestellt. An einem mit Blockflansch (2) aus-gestatteten Behälter (1) ist ein Kugelgehäuse (3) befestigt. Die Befestigung erfolgt mittels Schraube (4); weitere Schrauben sind nicht dargestellt. Das Kugelgehäuse (3) ist behälterseitig so ausgestaltet, daß es mit der Behälterinnenwand bündig abschließt. Hebel (5) dient zum Ein- und Ausschwenken der Kugel (6) von der Schließ- in die Öffnungsposition und umgekehrt. Das Kugelgehäuse (3) ist derart ausgestaltet, daß es bündig mit der Innenseite des Behälters (1) abschließt. Vorzugsweise ist auch Kugel (3) so ausgestaltet, daß diese in der Schließposition nicht in den Behälter (1) hineinragt. Das Kugelgehäuse (3) ist mit einem Einschraubwinkel (in der dargestellten Form einem 90° Einschraubwinkel) (7) ausgestattet; über diese kann z.B. Spülflüssigkeit in das Innere des Kugelgehäuses (3) zu- oder abgeführt werden. Flansch (8) steht mit dem Inneren des Behälters (1) in Verbindung, wenn Kugel (6) sich in Öffnungsposition befindet.

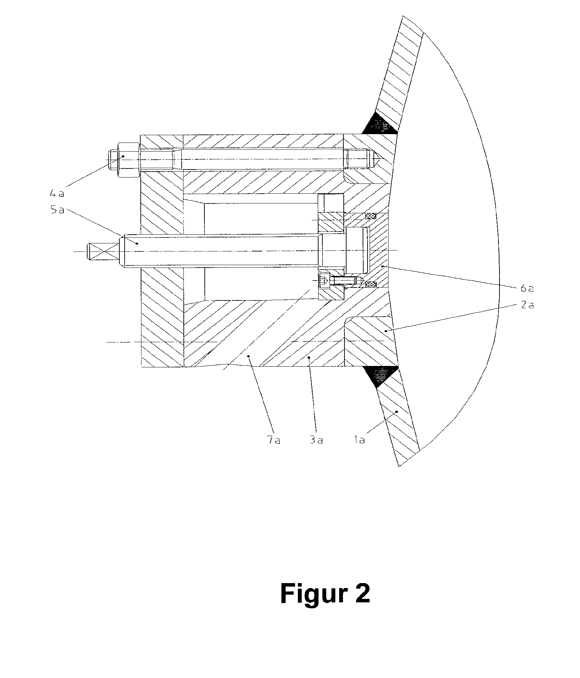

In Fig. 2 ist ein Schieber dargestellt. An einem mit Blockflansch (2a) ausge-statteten Behälter (1a) ist ein Schieberhäuse (3a) befestigt. Die Befestigung erfolgt mittels Schraube (4a); weitere Schrauben sind nicht dargestellt. Spindel (5a) dient zum Bewegen von Verschlußdeckel (6a) von der Schließ- in die Öffnungsposition und umgekehrt. Das Schiebergehäuse (3a) ist derart ausgestaltet, daß es bündig mit der Innenseite des Behälters (1a) abschließt. Vorzugsweise ist auch Verschlußdeckel (6a) so ausgestaltet, daß dieser in der Schließposition mit der Behälterinnenseite bündig abschließt. Das Schiebergehäuse (3a) ist mit einer Ein- oder Auslaßöffnung (7a) versehen, über die z.B. Flüssigkeit aus dem Behälter (1a) zu- oder abgeführt werden kann, wenn der Verschlußdeckel (6a) sich in Öffnungsposition befindet. Außerdem läßt sich über Ein- oder Auslaßöffnung (7a) Spülflüssigkeit in das Schiebergehäuse (3a) zu- oder abführen, beispielsweise, wenn Verschluß-deckel (6a) sich in Schließposition befindet.

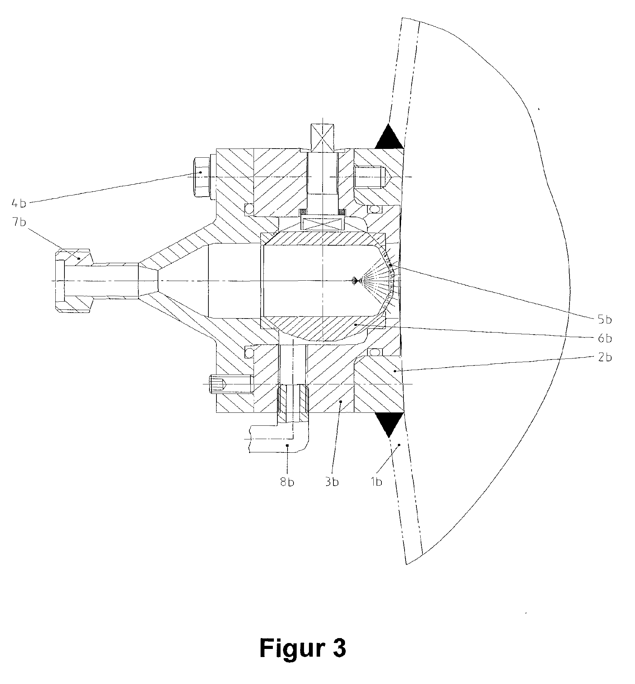

In Fig. 3 ist ein Kugelhahn dargestellt, der für Sprüh- und Reinigungszwecke des Behälterinnenraums eingesetzt werden kann. An einem mit Blockflansch (2b) ausgestatteten Behälter (1b) ist ein Kugelgehäuse (3b) befestigt. Die Befestigung erfolgt mittels Schraube (4b); weitere Schrauben sind nicht dargestellt. Das Kugelgehäuse (3b) ist behälterseitig so ausgestaltet, daß es mit der Behälterinnenwand bündig abschließt. Mittel zum Ein- und Ausschwenken der Sprühkugel (6b) sind nicht dargestellt. Das Kugelgehäuse (3b) ist derart ausgestaltet, daß es bündig mit der Innenseite des Behälters (1b) abschließt. Vorzugsweise ist auch Sprühkugel (3b) so ausgestaltet, daß diese_in der Schließposition nicht in den Behälter (1b) hineinragt. Das Kugelgehäuse (3b) ist mit einer Sterilverschraubung (7a) ausgestattet. Die Sprühkugel (3b) steht mit der Sterilverschraubung (7a) in Verbindung und weist einen durchbrochenen Teil der Oberfläche (5b) auf, über den ein Medium (Flüssigkeit, Gas, Feststoff) in das Behälterinnere geleitet werden kann. Ferner ist noch ein Einschraubwinkel (in der dargestellten Ausführungsform ein 90° Einschraub-winkel) (8b) vorgesehen, über die das Innere des Kugelgehäuses (3b) gespült werden kann.

Die erfindungsgemäßen Behälter kommen vorzugsweise bei der Herstellung oder Verarbeitung von sterilisierbaren Produkten, insbesondere von pharmazeutischen Produkten zum Einsatz.

## Patentansprüche

1. Behälter mit verschließbarer Öffnung umfassend
a) ein Kugelgehäuse, das an der verschließbaren Öffnung mit dem Behälter verbunden ist
b) eine Absperrkugel, und
c) Mittel, um die Absperrkugel aus einer Schließposition in eine Öffnungsposition oder wieder zurück zu bewegen, wobei
das Kugelgehäuse derart ausgestaltet ist, daß es bündig mit der Behälterinnenseite abschließt.

2. Behälter nach Anspruch 1, **dadurch gekennzeichnet, daß** die Absperrkugel derart ausgestaltet ist und derart im Kugelgehäuse positioniert ist, daß sie in der Absperrposition nicht über die Behälterinnenseite in den Behälter hineinragt.

3. Behälter nach Anspruch 2, **dadurch gekennzeichnet, daß** der oberste Punkt der Absperrkugel in Absperrposition gerade bündig mit der Behälter-innenseite abschließt oder daß der obere Teil der Kugel derart ausgestaltet ist, daß er mit der Behälterseite bündig abschließt.

4. Behälter nach Anspruch 1, **dadurch gekennzeichnet, daß** es sich um eine Chromatographiesäule handelt.

5. Behälter mit verschließbarer Öffnung umfassend
d) ein Schiebergehäuse, das an der verschließbaren Öffnung mit dem Behälter verbunden ist
e) einen Schieber, und
f) Mittel, um den Schieber aus einer Schließposition in eine Öffnungsposition oder wieder zurück zu bewegen, wobei
das Schiebergehäuse derart ausgestaltet ist, daß es bündig mit der Behälterinnenseite abschließt.

6. Behälter nach Anspruch 5, **dadurch gekennzeichnet, daß** die Oberfläche des Schiebers derart ausgestaltet ist, daß sie in Absperrposition mit der Behälterinnenseite bündig abschließt.

7. Behälter nach Anspruch 5, **dadurch gekennzeichnet, daß** es sich um eine Chromatographiesäule handelt.

8. Verwendung des Behälters nach Anspruch 1 oder Anspruch 5 bei der Herstellung oder Verarbeitung von sterilisierbaren Produkten, insbesondere von pharmazeutischen Produkten.
